# EUROPEAN PATENT SPECIFICATION

(11) **EP 1 733 626 B1**
(45) Date of publication and mention of the grant of the patent: **08.10.2008**
(21) Application number: 05105369.2
(22) Date of filing: 17.06.2005
(51) Int. Cl.: A23G 3/00, A21D 13/00

(54) **Biscuit comprising spun cotton candy**
Keks enthaltend Zuckerwatte
Biscuit fourré avec de la barbe à papa

(43) Date of publication of application: 20.12.2006
(73) Proprietor: Kraft Foods R & D, Inc. Zweigniederlassung München, 81737 München (DE)
(72) Inventor: Loeser, Ulrich, 82054 Sauerlach (DE); Lubascher, Maria, 81545 München (DE); Marder, Uwe, 83059 Kolbermoor (DE)
(74) Representative: Morf, Jan Stefan

(56) References cited:
- FR-A- 2 757 352
- US-A- 3 221 675

## Description

### FIELD OF THE INVENTION

The present invention relates to biscuits comprising spun cotton candy and processes for making the same.

### BACKGROUND OF THE INVENTION

It is known that biscuits fillings contain a large amount of regular sugar which makes the product cheaper because sugar is readily available at a low price. Furthermore, the higher the proportion of sugar content versus fat content, the lower the energy content. Finally, sugar supports the development of flavour and serves as a flavour enhancer.

However, if the sugar content of the biscuit fillings is increased above a certain level, the melting properties and mouthfeel on consumption of the biscuits, which are directly related to the fat content of the product, are affected. Furthermore, if too much sugar is used, the product becomes too sweet.

FR 2 757 352 discloses the use of cotton candy which is compacted to a ball and crushed into a powder for food applications.

It is the object of the present invention to provide biscuits with fillings which have a large sugar content and nevertheless display an attractive melting behaviour and mouthfeel on consumption and are acceptably sweet, i.e. are not too sweet.

### SUMMARY OF THE INVENTION

The problem is solved by biscuits with fillings which comprise spun cotton candy.

The problem is also solved by biscuits wherein part of the confection sugar in the fillings has been replaced by spun cotton candy.

In a preferred embodiment, the spun cotton candy is evenly distributed within the filling of the biscuits.

In a further preferred embodiment, the biscuit filling is coated or surrounded with the spun cotton candy such that the filling comprises the biscuit filling and the spun cotton candy.

In still further preferred embodiments, the biscuit fillings contain the spun cotton candy as at least one separate layer, individual flat pieces, separate little balls or a sliding block like shape such that the filling comprises the biscuit filling and the spun cotton candy.

### BRIEF DESCRIPTION OF THE DRAWINGS

- Fig. 1: is a flow chart illustrating the process for preparing the biscuits according to the present invention;
- Fig. 2: illustrates the process of converting spun cotton candy into flat mats;
- Fig. 3: illustrates an extrusion process for making cotton candy single filament strings;
- Fig. 4: illustrates the principle of replacing the sugar share by a cotton-candy-based substitute;
- Fig. 5: illustrates a biscuit according to the invention wherein the cotton candy is evenly distributed in the filling;
- Fig. 6: illustrates a biscuit according to the invention wherein the biscuit filling is surrounded by a cotton candy ring;
- Fig. 7: illustrates a biscuit according to the invention wherein the filling contains a layer of cotton candy;
- Fig. 8: illustrates a biscuit according to the invention wherein the filling contains flat individual pieces of cotton candy;
- Fig. 9: illustrates a biscuit according to the invention wherein the filling contains little balls of cotton candy;
- Fig. 10: illustrates a biscuit according to the invention wherein the filling comprises a biscuit filling and spun cotton candy with a sliding block like body shape.

### DETAILED DESCRIPTION OF THE INVENTION

The main aspect of the present invention relates to biscuits with fillings comprising spun cotton candy. In particular, the present invention refers to a biscuit with a filling wherein the filling comprises spun cotton candy.

In general, under the term "biscuit" all bakery products are to be understood. In particular, the term biscuit in the present invention means biscuits, cookies, crackers, sponges, wafers, chips, extruded products, cake bottoms, pastries, pizza dough, crusts or buns.

Starting from a common biscuit filling recipe having a high sugar content and leading to a very sweet product, it is preferred to replace a certain percentage of the regular confection sugar by spun cotton candy. In general, it is preferred that no more than about 40% by weight of the regular sugar is replaced by spun cotton candy. The spun sugar is blended with the filling mass, but remains discernable. It dissolves on the tongue slower than a traditional biscuit filling mass. Therefore, the fat content of the remaining filling mass increases and leads to a noticeable change in melting, i.e. an improved mouthfeel, and the product is less sweet. In addition, the spun sugar generates on consumption a crispy or candy-like impression.

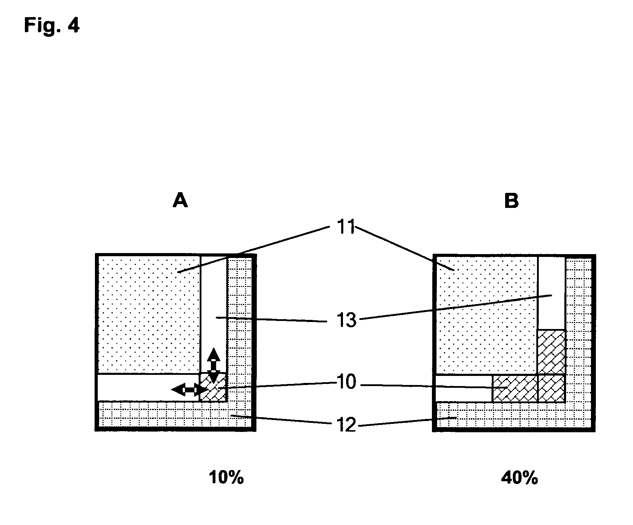

The principle of replacing sugar share by cotton-candy-based substitute is shown in Fig. 4.

On the other hand, starting from a common biscuit filling recipe which has a moderate and acceptable sweetness, it is possible to add additional spun cotton candy. The fat content of the remaining filling mass and its melting behaviour and mouthfeel remain unchanged, but the product becomes less expensive because the ratio of sugar to fat has increased. In addition, the spun sugar generates the already mentioned crispy or candy-like impression. The increased sugar content remains indiscernible, i.e. the product has no increased sweetness, due to the overall predominant biscuit-like impression at around the time when the biscuit disappears from the mouth into the stomach.

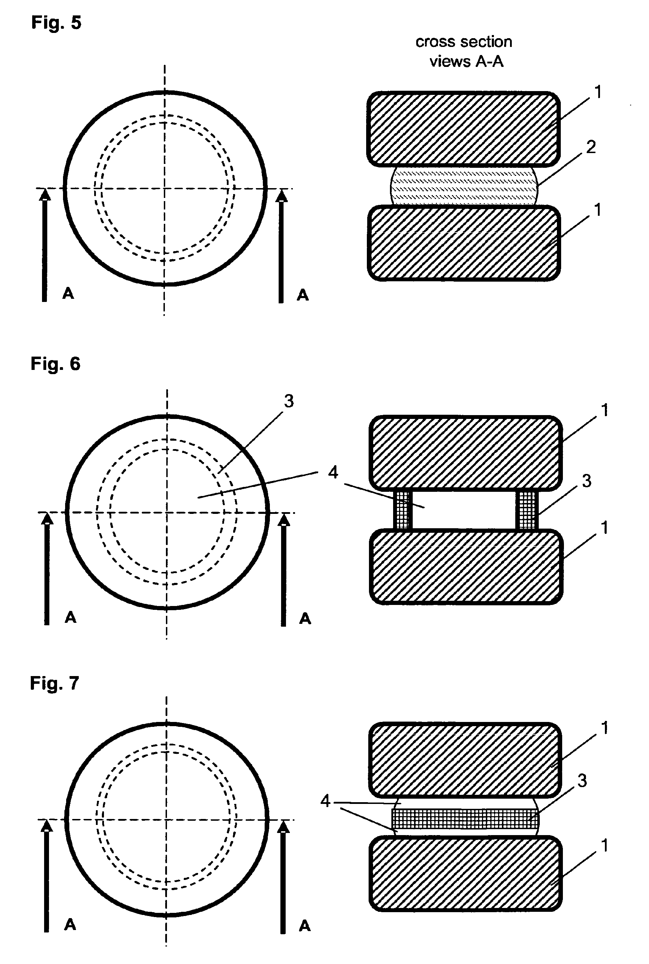

In a specific embodiment of the present invention, the spun cotton candy is evenly or homogenously distributed within the filling of the biscuit. A certain percentage of the sugar of a biscuit filling mass is separately modified via a liquid sugar spinning process and the finely divided spun sugar is then blended into the remaining filling mass. Fig. 5 illustrates such a biscuit consisting of two individual biscuits 1 further comprising a filling mass 2 in which the cotton candy is evenly distributed. The filling layer 2 is made of Ingredient Set 2a and Option 0 (see below), and is obtained according to Option 10.

Fig. 6 illustrates a further embodiment of the present invention. The spun cotton candy is used as a ring 3 which surrounds the biscuit filling mass 4. The original task of the filling 4, to be a glue between both biscuit parts 1, is kept as yet. This embodiment of the invention is particularly preferred because the heat-resistance of the biscuit is considerably increased. The spun sugar ring 3 protects the biscuit filling 4 from leakage so that the biscuits keep within shape even at higher temperatures. The filling layer 4 is made of Ingredient Set 2 and Option 0, and is obtained according to Option 11.

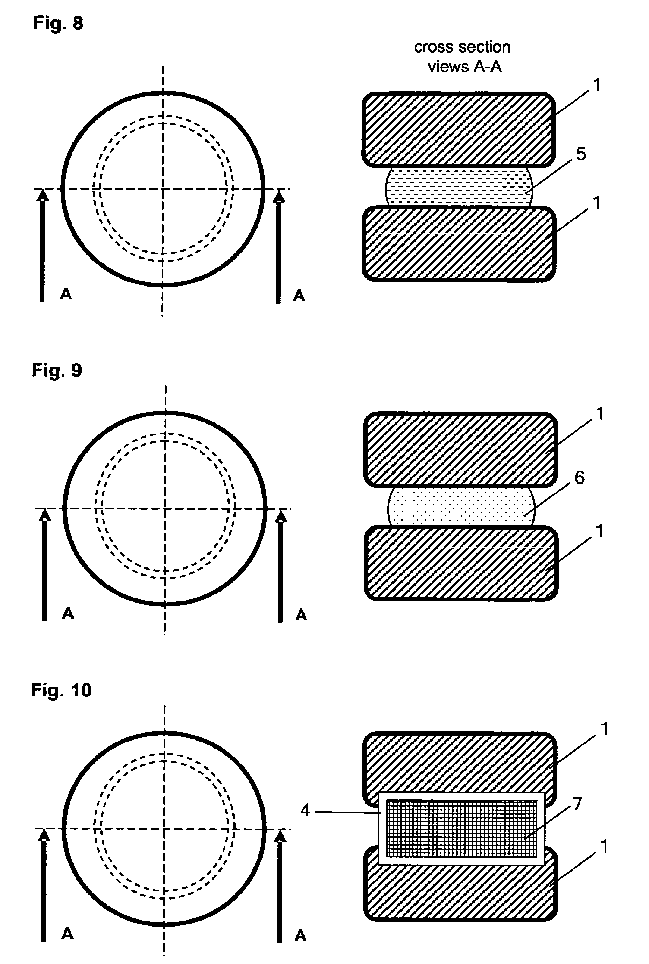

Further embodiments of the invention are illustrated in Figs. 7 to 10. A portion of the overall sugar content in the biscuit filling mass 4 is used to make spun cotton candy which is then formed either into a little disc which is deposited in-between the sequence of two shots depositing filling mass (3, Fig. 7) or it is formed into flat individual pieces (Fig. 8) or little balls (Fig. 9) which are evenly distributed within the filling (5, 6) or it is formed into a sliding block like shape (7, Fig. 10) which is put between two biscuits 1 each with a cavity to accept said block. The biscuit filling layers 4 in Fig. 7 are made of Option 0 and Ingredient Sets 2 or 2a, and the filling is obtained according to Option 12. The filling layers 5 and 6 in Figs. 8 and 9 are made of Ingredient Sets 2 or 2a and Option 0, and are obtained according to Options 13 and 14, respectively. The biscuit filling layer 4 in Fig. 10 is made of Option 0 and Ingredient Sets 2 or 2a, and the filling is obtained according to Option 15. It is preferred in these embodiments to employ Ingredient Set 2 since it contains no additional sugar content.

The consumer experiences two discernable taste perceptions, one associated with melting of the filling and one associated with the special sweetness of the spun cotton candy. However, the two discernable taste perceptions support each other and lead to a new and different product impression.

Spun cotton candy is a widespread product and processes for making same are well-known. Processes and apparatuses for making spun cotton candy are for example described in U.S. Patents 3,762,846; 3,723,134; 3,930,043; 4,293,292; 5,145,687; 5,779,946; 5,939,120 and 6,284,164 and in U.S. Patent Application 2002/0192319 A1, which are incorporated herein by reference.

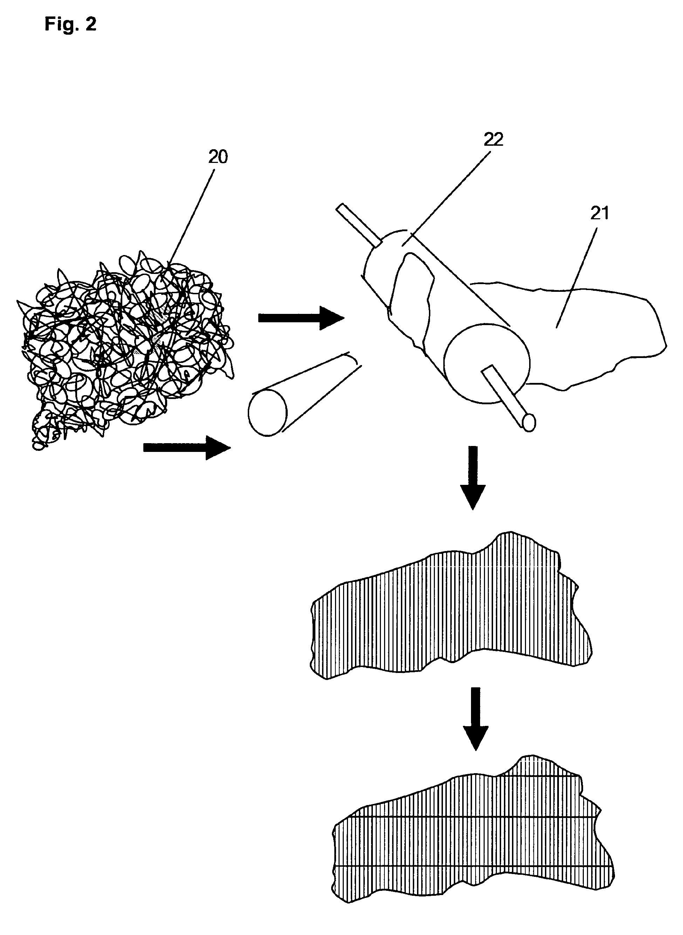

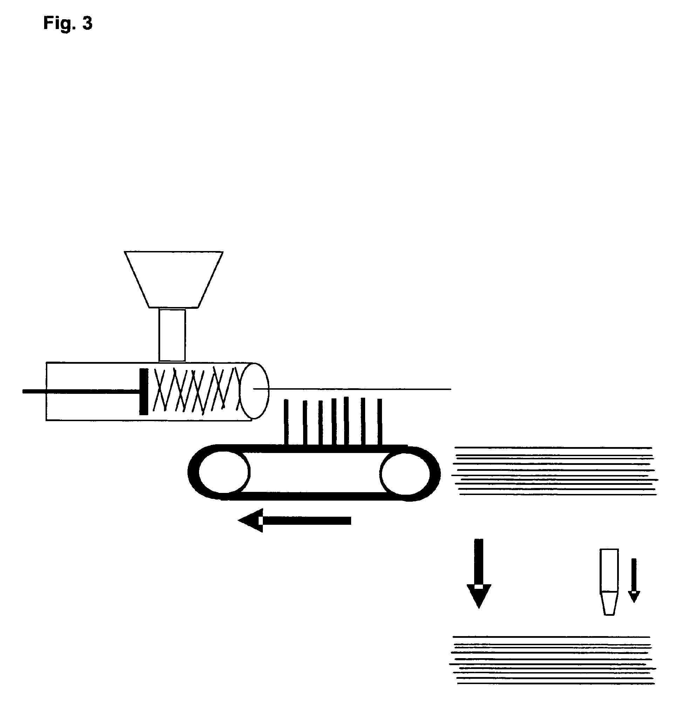

Spun cotton candy for the purposes of the present invention exhibits, for example, a density of between about 0.05 to about 0.50 g/cm³, preferably between about 0.10 to about 0.40 g/cm³, most preferably between about 0.10 and 0.11, 0.12, 0.13, 0.14 and 0.15 g/cm³. In particular, for the applications of the present invention the spun cotton candy is not crushed into powder as it is the case in, for example, FR 2 757 352. Instead, the spun cotton candy exhibits a filamentous structure maintaining the extraordinary physical properties of the spun cotton candy. The individual filaments exhibit, preferably, a length which is considerably higher than the diameter. It is preferred if the ratio of length:diameter of the individual filaments is between 5:1 and 100:1, more preferred between 5:1 and 50:1. In particular, the diameter of an individual filament of spun cotton candy can be between 0.01 and 0.1 mm, preferably between 0.02 and 0.08 mm and more preferred between 0.02 and 0.06 mm. Furthermore, as can be seen from Figs. 2 and 3, the spun cotton candy to be used in the present invention, preferably, exhibits a symmetric texture. It is particularly preferred, if the density of the spun cotton candy is within the above-mentioned ranges and the texture is symmetric.

Many different processes for producing the products of the present invention, i.e. processes for incorporating the spun cotton candy into biscuit fillings or for surrounding biscuit fillings with spun cotton candy, are possible and illustrated below in the specific examples of the invention. The process for preparing the biscuits of the invention differs from traditional processes in that spun cotton candy is added to the traditional recipe or in that part of the confection sugar is replaced by spun cotton candy. Apart from an optionally reduced confection sugar content, the biscuit filling recipes used within the present invention are the same as the ones which are used in conventional biscuit filling manufacturing, for example, fat-based biscuit fillings comprising fat, sugar, emulsifier and flavour. Usually, no additional water is added thereto.

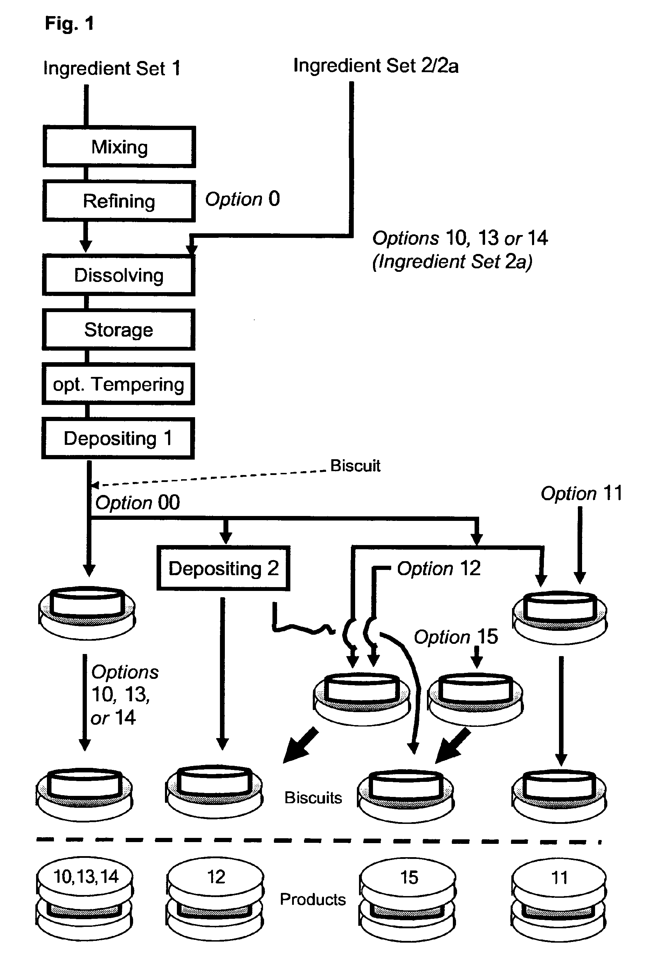

With reference to Fig. 1, the process is carried out unchanged according to customary biscuit filling mass manufacturing in the confectionery industry, up to the refining step. Due to the amorphous nature of spun cotton candy and the expected quality feature range of the finished product, the overall processing time is limited, e.g. to 30 min up to a maximum of 60 min.

Mixing to Refining: The term "Ingredient Set 1" includes components such as powdered sugar and filling fat. After processing Ingredient Set 1, an intermediate product is obtained after refining, called "Option 0", with a largely powder-like consistency (hereinafter also called "powder"). After mixing with Ingredient Set 2 or 2a, this material represents the base recipe for all subsequent manufacturing steps (hereinafter also called "base mass"). The term "Ingredient Set 2" includes components such as, e.g., filling fat, emulsifier and flavour. If products are intended to be made the fillings of which comprise a mixture of (optionally modified) biscuit filling and spun cotton candy (Options 10, 13 or 14), pre-processed spun cotton candy is included in Ingredient Set 2, and this mixture hereinafter is called "Ingredient Set 2a". The individual options are named as follows: 10 = small pieces of spun cotton candy; 13 = flat pieces of spun cotton candy; 14 = little balls of spun cotton candy. The special treatment procedures to obtain cotton candy processed in various ways are not shown in Fig. 1.

Dissolving to Depositing 1: In principle, the dissolving process is similar to those currently used in customary machines, but has no milling steps. The order in which ingredients are dosed is not shown in Fig. 1. In case of Options 10, 13 or 14, the pre-processed spun (filamentous) cotton candy (Option 10, 13 or 14) is gently mixed during dissolving with Ingredient Set 2 to obtain Ingredient Set 2a, and powder (Option 0). The resulting batch of liquid mass is carefully agitated and stored before tempering is begun. The need for a tempering process is generally determined by the fat systems used and their crystallization behaviour. The tempering stage (which is applied if spun cotton candy is present in the mixtures; Ingredient Set 2a) or, in other cases (Ingredient Set 2), the mass temperature adaptation stage is critical before depositing occurs. There are edible fats which are capable of polymorphic solidification to different crystal forms (e.g. cocoa butter or fats with a similar chemical composition), and those which are not oriented or have less orientation in the solid state. This effect determines the hardness of the product at a certain temperature and is crucial for consumer perception. The product obtained after the depositing step 1 is called "Option 00". It can be composed of either a mixture of Ingredient Set 2 or Ingredient Set 2a with Option 0.

Completion of products following Options 10, 13 and 14: One side of a first biscuit is furnished with an appropriate amount of filling mass, Option 00 (here resulting from a blend of Option 0 and Ingredient Set 2a). A second piece of biscuit is added on top, accordingly. In the meantime, the filling mass is spread to a pre-determined minimum filling thickness. Filling and biscuit stick together. The product is ready for packaging.

Completion product 11: A ring (Option 11) made of cotton candy is placed on one side of a first biscuit. A portion of base mass, Option 00 (here resulting from a blend of Option 0 and Ingredient Set 2), is dosed onto the inside of this ring, preferably such that the base mass extends at least in part over the upper rim of the ring. A second piece of biscuit is then added on top, accordingly. In the meantime, the base mass is spread to the rim of the ring. Base mass, ring and biscuits stick together. The product is ready for packaging.

Completion product 12: One side of a first biscuit is furnished with approximately 50% of base mass, Option 00. A disk, Option 12, made of spun cotton candy, is then placed on the filling centre and gently pressed. In a second depositing step, the remaining 50% of the base mass is then added. A second piece of biscuit is then added on top, accordingly. In the meantime, both base mass layers are spread to a predetermined minimum product filling thickness. Base mass, disk and biscuits stick together. The product is ready for packaging.

Completion product 15: One side of each biscuit has a cavity which is prepared to accept (a) biscuit filling mass and (b) a sliding block like body shape made of spun cotton candy. The cavity is furnished with approximately 33% of the base mass, Option 00. A sliding block, Option 15, made of spun cotton candy, is then placed on the filled cavity and gently pressed. In a second depositing step, another 33% of the base mass is distributed along the outer edge of the sliding block. In a third depositing step, the remaining base mass is added on top of the sliding block. A second piece of biscuit is then added on top, accordingly. Alternatively, the remaining base mass can be filled into the cavity of the second biscuit and the second biscuit is placed onto the first biscuit such that the filling comes in contact with the sliding block. In the meantime, both filling layers and the cover layer are spread to a predetermined minimum product filling thickness. Filling, sliding block and biscuits stick together. The product is ready for packaging.

In general, the filling is applied to the biscuit in a range between 20 and 30 mass percent of the sum of biscuit and filling.

The invention will now be illustrated by specific examples which describe preferred embodiments of the present invention. They are not intended to limit the scope of the invention.

### EXAMPLES

### Example 1

### Making cotton candy:

Using the commercial machine WHIRLWIND X-15R, manufacturer Gold Medal Product Company, Cincinnati, Ohio, USA (settings for heat range C and for heat control fine tuning 4-5) and regular crystal sugar cotton candy, the procedure was as follows: (1) switch on the machine (2) wait until the warm-up period has finished, (3) manually insert a wooden stick (approx. 150 mm long and with a diameter of 1.5 mm) vertically into the air flow, (4) turn the wooden stick clockwise, coil the threads carefully onto the stick and the resulting dabber. The spun cotton candy remains on the stick. To store spun cotton candy for a short period after manufacturing, approx. 15 min maximum, the stick is inserted into a holder before further processing.

### Making spun cotton candy mats:

As can be seen from Fig. 2, the random structure of a spun cotton candy dabber 20 is converted into mat shapes 21 using a manual rolling pin 22. The spun cotton candy dabber 20 is removed from the stick using a knife and put on a table with a polished marble top surface. The operator manually passes the rolling pin 22 over the spun cotton candy material 20 several times. During this process, contact pressure is increased slowly but stopped when the film 21 becomes thinner. Usually, the film thickness is not less than 1 mm. To avoid cracking the film and brittle mat, the contact pressure must not exceed a certain threshold. The mat is ready for further processing, for example, cutting into different shapes.

### Making spun cotton candy rings (not shown):

Cotton candy bodies are made using a specific shaping process. This is carried out manually using the mats described above by means of a punching instrument or a knife.

### Example 2

Making a filling mass in which the sugar portion has been partly substituted by spun-cotton-candy-based material:

Compared to customary filling manufacturing, the changes affect filling mass recipes after the refining step (see Fig. 1). Some masses which are prepared for use with spun cotton candy have not reached their final recipe after they are dissolved. The technology requires additional dosing steps after refining. Depending on the product design chosen, see Figs. 5 to 10, the recipe is completed before, during or after mass depositing steps, see recipe example.

| | Component | Non-modified filling | 20% sugar replacement | 40% sugar replacement |
|---|---|---|---|---|
| Mixer | Powdered sugar | 62 | 49.6 | 37.2 |
| | Filling fat | 37.5 | 37.5 | 37.5 |
| | Emulsifier, flavour | 0.5 | 0.5 | 0.5 |
| Dissolver | Cotton candy | 0 | 12.4 | 24.8 |
| | Total | 100 | 100 | 100 |

The shape of the added sugar substitute might change, see Figs. 2+6+7+10 or Figs. 2+3+5+8+9, but it is critical to retain the resulting overall recipe when conversion is complete. Beyond the recipe, there is no difference in the manufacturing technology between filling masses with separate sugar treatment and those without.

Terminology used: The different recipe stages are named using "Option XX", e.g. "Option 00" represents the base filling mass obtained after the step "Depositing 1" of a mixture of Option 0 with Ingredient Set 2 or Ingredient Set 2a with adequately reduced sugar portion, as the case may be.

Limiter: As known from the literature, the recrystallization process in amorphous sugar limits the time available for processing and execution in order to maintain optimum processing and product quality. This restriction applies to all the examples below.

Results: Filling mass behaviours will be different: (a) Due to a higher fat content, a filling mass with a reduced sugar portion will have a lower viscosity, but this has only a slight effect on consumption as it is usually consumed with biscuit. (b) Due to actual vs. traditional filling manufacturing technology (Fig. 1), the relative ratio between the fat phase and sugar between different filling layers is changed intentionally. Using this, the sweetness of the product in the mouth during chewing can be influenced. This is also generally applicable to all the combinations described in the examples below.

### Example 3

### Product: "Filled", see also Fig. 1, Option 10 or Fig. 5:

The product "Filled" consists of one of the masses described, see recipes in Example 2 (including one of the processed spun cotton candies, see Figs. 2 and 3). Either a mat of spun cotton candy with irregular structure, see Fig. 2, or a bundle of individual cotton candy threads, see Fig. 3, is cut into very small (filamentous) segments.

Preparation: The components are carefully agitated to obtain a homogeneous filling mass, with or without incorporation of air, tempered if necessary and then deposited as follows.

Firstly, a filling mass is deposited on the top surface of the biscuit, as shown in Option 10 in Fig. 1 after the step "Depositing 1". Secondly, another piece of biscuit is placed on top of the previously deposited filling. The filling surface is intentionally brought into contact with the lower surface of the upper biscuit, not shown in Option 10 in Fig. 1. The product is fully assembled.

Features: The consumer registers crunchiness but only slight changes in mouthfeel. This is not distinguishable to the consumer due to the presence of biscuit during consumption. A major advantage of carrying out solid portion preparation is to bind structures of amorphous sugar. Fig. 4 shows the principle of replacing the sugar portion 13 with spun-cotton-candy-based substitute 10 (the biscuit filling further comprises fat 12 and other solids 11). Variant A has a spun-cotton-candy-based substitute 10 content of 10%, whereas the substitute content in variant B is 40%.

### Example 4

Product: "Filling inside a ring", see also Fig. 1, Option 11 or Fig. 6:

The product "Filling inside a ring" consists of one of the masses described, see recipes in Example 2, and a ring shaped piece of processed spun cotton candy, see Fig. 2 (conversion to ring shape is not shown) and Fig. 6.

Preparation: The ring, Option 11, is deposited on the top surface of a first biscuit and filled with filling mass, Option 00. A second biscuit is then placed on top of the filled ring. The filling surface is intentionally brought into contact with the lower surface of the upper biscuit. The product is fully assembled.

Features: The presence of a ring made of spun cotton candy is designed to prevent the liquid filling running off in warmer environments outside the wrapper or before consumption. In addition, the stability of the biscuit is increased which is advantageous during packing, handling and transportation. The consumer registers crunchiness but only slight changes in mouthfeel. This is not distinguishable to the consumer due to the presence of biscuit during consumption. A major advantage of carrying out solid portion preparation is to bind structures of amorphous sugar. The principle of replacing the sugar portion with spun-cotton-candy-based substitute is shown in Fig. 4.

### Example 5

Product: "Filling with centre layer", see also Fig. 1, Option 12 or Fig. 7:

The product "Filling with centre layer" consists of one of the masses described, see recipes in Example 2, and a piece of processed cotton candy, see Fig. 2, but with a disk-like shape (not shown), and Fig. 7.

Preparation: Firstly, filling mass is deposited on the top surface of a first biscuit. An individual piece of disk-like shaped cotton candy is then placed on the top surface of this filling, Option 12 in Fig. 1. A second portion of filling mass is then deposited on the top surface of the cotton candy layer, followed by a second biscuit which is placed on top of the second filling portion. The filling surface is intentionally brought into contact with the lower surface of the upper biscuit, not shown in Option 12 in Fig. 1. The product is fully assembled.

Features: The presence of a disk made of spun sugar is designed to combine the advantages of a sugar-reduced filling with additional crunchiness during consumption. The consumer registers crunchiness but only slight changes in mouthfeel. This is not distinguishable to the consumer due to the presence of biscuit during consumption. A major advantage of carrying out solid portion preparation is to bind structures of amorphous sugar. The principle of replacing the sugar portion with spun cotton-candy-based substitute is shown in Fig. 4.

### Example 6

Product: "Blended filling mixed with flat pieces of spun cotton candy", see also Fig. 1, Option 13 or Fig. 8:

The product "Blended filling mixed with flat pieces of spun cotton candy" consists of one of the masses described, see Example 2, and a quantity of processed spun cotton candy, see Fig. 2. A mat of spun cotton candy with irregular structure is sliced into pieces according to Fig. 2.

Preparation: The components are agitated carefully to obtain a homogeneous filling mass with or without incorporation of air and tempered if required. The subsequent steps are as follows: Firstly, the filling mass is deposited on the top surface of a first biscuit, as shown in Option 13 in Fig. 1. A second biscuit is then placed on top of the filling portion. The filling surface is intentionally brought into contact with the lower surface of the upper biscuit, not shown in Option 13 in Fig. 1 after the step "Depositing 1". The product is fully assembled.

Features: The consumer registers crunchiness but only slight changes in mouthfeel. This is not distinguishable to the consumer due to the presence of biscuit during consumption. A major advantage of carrying out solid portion preparation is to bind structures of amorphous sugar. The principle of replacing the sugar portion with spun-cotton-candy-based substitute is shown in Fig. 4.

### Example 7

Product: "Blended filling with little balls of spun cotton candy", see also Fig. 1, Option 14 or Fig. 9:

The product "Blended filling with little balls of spun cotton candy" consists of one of the masses described, see Example 2, and a quantity of processed spun cotton candy, see Fig. 2. According to Fig. 2, a mat of spun cotton candy with irregular structure is sliced into pieces (the conversion to little balls is not shown but can, for example, be achieved by manually rolling the pieces between the fingertips of the operator).

Preparation: The components are agitated carefully to obtain a homogeneous filling mass with or without incorporation of air and tempered, if required. The subsequent steps are as follows: Firstly, the filling mass is deposited on the top surface of a first biscuit, as shown in Option 14 in Fig. 1 after the step "Depositing 1". A second biscuit is then placed on top of the filling portion. The filling surface is intentionally brought into contact with the lower surface of the upper biscuit, not shown in Option 14 in Fig. 1. The product is fully assembled.

Features: The consumer registers crunchiness but only slight changes in mouthfeel. This is not distinguishable to the consumer due to the presence of biscuit during consumption. A major advantage of carrying out solid portion preparation is to bind structures of amorphous sugar. The principle of replacing the sugar portion with spun-cotton-candy-based substitute is shown in Fig. 4.

### Example 8

Product: "Filling with sliding block like body shape", see also Fig. 1, Option 15 or Fig. 10:

The product "Filling with sliding block like body shape" consists of one of the masses described, see recipes in Example 2, and a piece of processed spun cotton candy, see Fig. 2 (conversion into sliding block like body shape is not shown, but can, for example, be achieved by making a mat of spun cotton candy with a desired thickness (corresponding to the thickness of the sliding block like body shape) and using an appropriate punching tool to punch out the blocks) and Fig. 10. In contradiction to all other examples, the shape of both biscuits differs. One side of each biscuit has got a cavity which is prepared to accept the sliding block like body shape made out of spun cotton candy in-between.

Preparation: The sliding block like body shape (in the following called "body"), which is made of spun cotton candy, represents an adequate portion of cotton candy. Before putting the body into the cavity of the first biscuit, one side of the body receives one or more droplets of filling mass (not shown) as an adhesive. The remaining filling share is deposited on the lateral surface(s) of the body. The body is then put into the cavity of the first biscuit. Before completion of product assembly, one or more droplets of filling mass (not shown) are put on the remaining side of the body (the side which is not in contact with the first biscuit). As subsequent step, final product assembly will follow by placing the second biscuit onto the body.

Features: The presence of the body is designed to get rid of any translational displacement between both biscuits during manufacturing and at a later stage during the lifetime of the biscuit. Geometry of the body and the cavities are, in principle, irrelevant. The consumer registers crunchiness but only slight changes in mouthfeel. This is not distinguishable to the consumer due to the presence of biscuits during consumption. A major advantage of carrying out solid portion preparation is to bind structure of amorphous sugar. The principle of replacing the sugar portion with spun-cotton-candy-based substitute is shown in Fig. 4.

This embodiment is, in general, useful for biscuits with all kind of fillings, not only fillings based on or comprising cotton candy. Thus, it is also included in the present invention a consumable comestible, comprising a first and second biscuit with a filling placed between both biscuits, wherein at least one biscuit comprises at least one cavity. The filling is designed to meet the shape of the at least one cavity such that it is absorbed by the cavity or, in other words, extends at least partially into the cavity. The cross section of the cavity may be of any shape, for example, circular, rectangular, square, oval, star-shaped, pentagonal, hexagonal, heptagonal, or octagonal. Thus, the following cavity shapes may, in principle, be obtained: cylinder, cuboid or block. The cavity may also exhibit different diameters along its depth which results, for example, in a frustum or a cone. As mentioned, at least one cavity is present in at least one biscuit. Accordingly, it is possible to provide a number of cavities to a biscuit which cavities have the same or different shapes and/or cross sections. The filling is then designed to meet essentially all of the cavities. It is possible that only one biscuit is provided with a cavity to absorb the filling. However, it is preferred if all of the biscuits are provided with a cavity, preferably with the same shape. However, differently shaped cavities on different biscuits are possible. It is also possible that the final comestible comprises more than two biscuits resulting in a sandwich-like structure. The use of three biscuits and two fillings is preferred. In that latter embodiment, the upper and lower biscuits exhibit at least one cavity on only one side, and the biscuit in the middle position exhibits at least one cavity on both sides. Consequently, two fillings are contained in such a comestible, one between the lower and the middle biscuit and one between the middle and the upper biscuit. It is, of course, encompassed in this invention that the fillings mentioned above correspond to the spun cotton candy fillings of the present invention. The advantage of comestibles prepared according to this embodiment is that the biscuits are fixed in place due to the filling which extends into the cavities of the biscuits. Accordingly, handling of the biscuits is improved in that they are less sensitive to forces applied during packaging, production or transport. In addition, the fillings are at least partially surrounded by the biscuits such that they are protected from environmental influences.

## Claims

1. Biscuit with a filling, wherein the filling comprises spun cotton candy.

2. Biscuit according to claim 1, **characterized in that** part of the confection sugar in the filling is replaced by spun cotton candy.

3. Biscuit according to claims 1 or 2, **characterized in that** the spun cotton candy is evenly distributed within the filling or present as individual flat pieces or separate little balls within the filling.

4. Biscuit according to claims 1 or 2, **characterized in that** the filling is a biscuit filling surrounded by a ring of spun cotton candy, the filling comprises the spun cotton candy as at least one separate layer, preferably as a disk-like shaped layer, or as a sliding block like body shape.

5. Process for preparing filled biscuits, **characterized in that** the filling is combined with spun cotton candy.

6. Process according to claim 5, **characterized in that** the filling may have reduced confection sugar content.

7. Process according to claim 6, **characterized in that** the confection sugar content is reduced by no more than 40% by weight.

8. Process according to any one of claims 5 to 7, **characterized in that** the spun cotton candy is evenly distributed within the filling or present as individual flat pieces or separate little balls within the filling.

9. Process according to any one of claims 5 to 7, **characterized in that** the filling is a biscuit filling surrounded by a ring of spun cotton candy, the filling comprises the spun cotton candy as at least one separate layer, preferably as a disk-like shaped layer, or as a sliding block like body shape.

10. Use of spun cotton candy for the preparation of filled biscuits.

## Patentansprüche

1. Gebäck mit einer Füllung, wobei die Füllung gesponnene Zuckerwatte enthält.

2. Gebäck gemäß Anspruch 1, **dadurch gekennzeichnet, dass** ein Teil des Puderzuckers in der Füllung durch gesponnene Zuckerwatte ersetzt ist.

3. Gebäck gemäß Anspruch 1 oder 2, **dadurch gekennzeichnet, dass** die gesponnene Zuckerwatte gleichmäßig innerhalb der Füllung verteilt ist oder als einzelne flache Stücke oder separate kleine Kügelchen innerhalb der Füllung vorliegt.

4. Gebäck gemäß Anspruch 1 oder 2, **dadurch gekennzeichnet, dass** die Füllung eine Gebäckfüllung ist, die von einem Ring aus gesponnener Zuckerwatte umgeben ist, wobei die Füllung die gesponnene Zuckerwatte als wenigstens eine separate Schicht, vorzugsweise als eine scheibenartig geformte Schicht, oder als eine gleitblockartige Körperform enthält.

5. Verfahren zur Herstellung von gefüllten Gebäckstücken, **dadurch gekennzeichnet, dass** die Füllung mit gesponnener Zuckerwatte kombiniert wird.

6. Verfahren gemäß Anspruch 5, **dadurch gekennzeichnet, dass** die Füllung einen verringerten Puderzuckergehalt enthalten kann.

7. Verfahren gemäß Anspruch 6, **dadurch gekennzeichnet, dass** der Puderzuckergehalt um nicht mehr als 40 Gew.-% verringert ist.

8. Verfahren gemäß irgendeinem der Ansprüche 5 bis 7, **dadurch gekennzeichnet, dass** die gesponnene Zuckerwatte gleichmäßig innerhalb der Füllung verteilt wird oder als einzelne flache Stücke oder separate kleine Kügelchen innerhalb der Füllung vorliegt.

9. Verfahren gemäß irgendeinem der Ansprüche 5 bis 7, **dadurch gekennzeichnet, dass** die Füllung eine Gebäckfüllung ist, die von einem Ring aus gesponnener Zuckerwatte umgeben ist, wobei die Füllung die gesponnene Zuckerwatte als wenigstens eine separate Schicht, vorzugsweise als eine scheibenartig geformte Schicht, oder als eine gleitblockartige Körperform enthält.

10. Verwendung von gesponnener Zuckerwatte zur Herstellung von gefüllten Gebäckstücken.

## Revendications

1. Biscuit fourré dans lequel la garniture comprend du sucre filé.

2. Biscuit selon la revendication 1, **caractérisé en ce qu'**une partie du sucre de confiserie contenue dans la garniture est remplacée par du sucre filé.

3. Biscuit selon les revendications 1 ou 2, **caractérisé en ce que** le sucre filé est uniformément réparti dans la garniture ou présent sous la forme de morceaux plats individuels ou de petites billes distinctes dans la garniture.

4. Biscuit selon les revendications 1 ou 2, **caractérisé en ce que** la garniture est une garniture de biscuit entourée d'un anneau de sucre filé, la garniture comprend le sucre filé sous la forme d'au moins une couche séparée, de préférence d'une couche en forme de disque ou d'une configuration de corps du genre intercalaire.

5. Procédé pour préparer des biscuits fourrés, **caractérisé en ce que** la garniture est combinée avec du sucre filé.

6. Procédé selon la revendication 5, **caractérisé en ce que** la garniture peut avoir une teneur réduite en sucre de confiserie.

7. Procédé selon la revendication 6, **caractérisé en ce que** la teneur en sucre de confiserie est réduite de pas plus de 40 % en poids.

8. Procédé selon une quelconque des revendications 5 à 7, **caractérisé en ce que** le sucre filé est uniformément réparti dans la garniture ou présent en morceaux plats individuels ou en petites billes distinctes dans la garniture.

9. Procédé selon une quelconque des revendications 5 à 7, **caractérisé en ce que** la garniture est une garniture de biscuit entourée d'un anneau de sucre filé, la garniture comprend le sucre filé sous la forme d'au moins une couche séparée, de préférence d'une couche en forme de disque ou d'une configuration de corps du genre intercalaire.

10. Utilisation de sucre filé pour la préparation de biscuits fourrés.
